# EUROPÄISCHE PATENTSCHRIFT

(11) **EP 1 334 625 B1**
(45) Veröffentlichungstag und Bekanntmachung des Hinweises auf die Patenterteilung: **06.03.2013**
(21) Anmeldenummer: 01996977.3
(22) Anmeldetag: 25.10.2001
(51) Int. Cl.: H04Q 3/00, H04M 7/12

(54) **VERFAHREN ZUM EINSCHALTEN EINES TEILNEHMERSIGNALS, ZUGEHÖRIGE VERMITTLUNGSSTELLE UND ZUGEHÖRIGES PROGRAMM**
METHOD FOR SWITCHING ON A SUBSCRIBER SIGNAL, CORRESPONDING SWITCHING CENTRE AND CORRESPONDING PROGRAMME
PROCEDE DE CONNEXION D'UN SIGNAL D'ABONNE, CENTRAL TELEPHONIQUE ASSOCIE ET PROGRAMME ASSOCIE

(30) Priorität: 15.11.2000 EP 00124931
(43) Veröffentlichungstag der Anmeldung: 13.08.2003
(73) Patentinhaber: Nokia Siemens Networks GmbH & Co. KG, 81541 München (DE)
(72) Erfinder: GAISER, Franz, 81927 München (DE); HOFFMANN, Klaus, 81735 München (DE)
(86) Internationale Anmeldenummer: PCT/EP2001/012363
(87) Internationale Veröffentlichungsnummer: WO 2002/041645

(56) Entgegenhaltungen:
- WO-A-00/39969
- US-A- 5 926 537
- HUITEMA C ET AL: "AN ARCHITECTURE FOR RESIDENTIAL INTERNET TELEPHONY SERVICE" IEEE NETWORK, Bd. 13, Nr. 3, 1. Mai 1999 (1999-05-01), Seiten 50-56, XP000870631 NEW YORK, USA ISSN: 0890-8044

## Beschreibung

Die Erfindung betrifft ein Verfahren, bei dem von einem rufenden Endgerät eines durchschaltevermittelten Telekommunikations-Netzes unter Einbeziehung einer Netzübergangsfunktion ein Übertragungsweg zu einem gerufenen Endgerät eines Paketübertragungs-Netzes festgelegt wird. Von der Seite des gerufenen Endgerätes kommt eine für das Paketübertragungs-Netz festgelegte Signalisierungsnachricht, die anzeigt, dass das gerufene Endgerät den Ruf einem Teilnehmer signalisiert. Beim Auftreten der für das Paketübertragungs-Netz festgelegten Signalisierungsnachricht wird auch für das durchschaltevermittelte Netz eine Signalisierungsnachricht erzeugt. Außerdem muss ein Teilnehmersignal, z.B. ein Rufton, zum rufenden Endgerät hin übertragen werden.

Das durchschaltevermittelte Telekommunikations-Netz ist beispielsweise ein Netz, in welchem die Nutzdaten in Zeitkanälen gemäß einem Zeitmultiplexverfahren weitergeleitet werden, z.B. in Zeitkanälen eines PCM-Systems (Pulse Code Modulation). Ein solches Netz ist beispielsweise das Telefonnetz der deutschen Telekom AG. Das Endgerät ist beispielsweise ein ISDN-Telefon (Integrated Services Digital Network), ein analoges Telefon oder ein Bildtelefon.

Das Paketübertragungs-Netz ist beispielsweise das Internet oder ein gemäß Internetprotokoll arbeitendes Datenübertragungs-Netz. Jedoch werden auch andere Paketübertragungs-Netze eingesetzt, z.B. ATM-Netze (Asynchronous Transfer Mode). In einem ATM-Netz werden die Datenpakete auch als Zellen bezeichnet. Die Datenpakete bzw. Zellen enthalten Lenkdaten, die für das Weiterleiten der in den Datenpaketen enthaltenen Nutzdaten eingesetzt werden.

Im Paketübertragungs-Netz wird beispielsweise gemäß Protokoll SIP (Session Invocation Protocol), siehe Defacto-Standard RFC 2543 (Request For Comment) der IETF (Internet Engineering Task Force), oder gemäß Standard H.323 der ITU-T (International Telecommunication Union - Telecommunication Standardization Sector) im weiteren Sinne signalisiert.

Wird der Standard H.323 eingehalten, so sind die folgenden von der ITU-T festgelegten Standards von Bedeutung:
- H.323 (1998) "Packed based multimedia communications systems",
- H.225.0 (1999) "Call signalling protocols and media stream packetization for packed based multimedia communications systems",
- H.450.1 (1998) "Generic functional protocol for the support of supplementary services in H.323",
- H.246 (02/98) "Interworking of H-Series multimedia terminals with H-Series multimedia terminals and voice/voiceband terminals on GSTN and ISDN", und
- H.246 Annex C (02/00) "ISDN user part function - H.225.0 interworking Annex C".

Im letztgenannten Standard ist das Einschalten eines Teilnehmersignals, nämlich eines Ruftons, beim Aufbau eines Rufs aus dem durchschaltevermittelten Netz in das Paketübertragungs-Netz im Abschnitt C.7.1.3 "Sending of the Address Complete Message (ACM)" angesprochen. Demnach soll bei der Übertragung von "Sprachdaten" oder "3,1 kHz Audio" z.B. ein Rufton nach dem Empfang der ersten Alerting-Nachricht an das rufende Endgerät gesendet werden.

Die PatentschriftWO 00/39969 A befasst sich allgemein mit Netzübergangsfunktionen ohne Hinweis auf das beanspruchte Einschalten eines Teilnehmersignals, während in der Patentschrift US 5,926,537 A lediglich ein Verfahren beschrieben wird, in dem die Ursprungsvermittlunqsstelle die Zielvermittlungsstelle instruiert, einen bestimmten Rufton, abzugeben.

Es ist Aufgabe der Erfindung, zum Einschalten eines Teilnehmersignals, insbesondere eines Ruftons, ein einfaches Verfahren anzugeben. Außerdem soll eine zugehörige Vermittlungsstelle und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass die Netzübergangsfunktion bisher, z.B. im Standard H.246, nur sehr allgemein beschrieben ist. Es ist nicht bekannt, wo die Einspeisung des Teilnehmersignals erfolgen soll. Soll dies in einer Einheit zur Erbringung der Netzübergangsfunktion, in der an diese Einheit angrenzenden Vermittlungsstelle des durchschaltevermittelten Netzes oder in einer anderen Einheit des durchschaltevermittelten Netzes erfolgen. Außerdem ist zwar gefordert, dass eine Standard-Signalisierungsnachricht erzeugt werden soll. Wie die Bearbeitung der für das Paketübertragungs-Netz festgelegten Signalisierungsnachricht erfolgen soll, ist dagegen nicht angegeben. Auch das SIP-Protokoll gibt die Netzübergangsfunktion nur allgemein an.

Die Erfindung geht weiterhin von der Überlegung aus, dass zwischen der für das Paketübertragungs-Netz festgelegten Signalisierungsnachricht und der Signalisierungsnachricht für das durchschaltevermittelte Netz zweckmäßigerweise noch mindestens eine andere Signalisierungsnachrichten erzeugt werden sollte. Solche Signalisierungsnachrichten würden das Einschalten der Teilnehmersignalisierung erleichtern.

Deshalb wird beim erfindungsgemäßen Verfahren beim Auftreten der für das Paketübertragungs-Netz festgelegten Signalisierungsnachricht eine Folge-Signalisierungsnachricht erzeugt, die anzeigt, dass noch kein Teilnehmersignal für das rufende Endgerät erzeugt worden ist. So enthält die Folge-Signalisierungsnachricht beispielsweise eine diesbezügliche Angabe. Die Folge-Signalisierungsnachricht wird anschließend bearbeitet, wobei das Einschalten des Teilnehmersignals veranlasst wird. Erst danach wird die für das durchschaltevermittelte Netz festgelegte Standard-Signalisierungsnachricht erzeugt, die anzeigt, dass bereits ein Teilnehmersignal für das rufende Endgerät erzeugt wird.

Die Folge-Signalisierungsnachricht ist somit eine Nachricht, in die sich der Informationsgehalt der für das Paketnetz festgelegten Signalisierungsnachricht übernehmen lässt. Außerdem ist die Folge-Signalisierungsnachricht in dieser Hinsicht auch an die Standard-Signalisierungsnachricht angepasst. Zusätzlich enthält die Folge-Signalisierungsnachricht bereits eine Information zum Teilnehmersignal. Auch die Standard-Signalisierungsnachricht liefert eine solche Angabe, wenn auch mit einem anderen Wert. Damit bildet die Folge-Signalisierungsnachricht bezüglich des Informationsgehaltes ein Zwischenstadium zwischen der für das Paketnetz festgelegten Signalisierungsnachricht und der Standard-Signalisierungsnachricht. Das Verwenden einer solchen Folge-Signalisierungsnachricht ermöglicht es, das Einschalten der Teilnehmersignalisierung an einer vergleichsweise frei wählbaren Stelle des Signalisierungsweges zu veranlassen. Ohne eine solche Folge-Signalisierungsnachricht müsste das Einschalten des Teilnehmersignals von der Stelle veranlasst werden, welche die für das Paketnetz festgelegte Signalisierungsnachricht empfängt. Durch die Wahlmöglichkeit gibt es beim Aufbau der Netzübergangsfunktion Freiheitsgrade, die einen einfachen Aufbau gestatten. So lassen sich Einheiten zum Erbringen der Netzübergangsfunktion räumlich voneinander getrennt aufstellen oder die Netzübergangsfunktionen können durch verschiedene Baugruppen erbracht werden, zwischen denen Signalisierungsnachrichten ausgetauscht werden.

Bei einer Weiterbildung des erfindungsgemäßen Verfahrens ist die Folge-Signalisierungsnachricht eine für das durchschaltevermittelte Netz festgelegte Signalisierungsnachricht. Zum Übertragen der Folge-Signalisierungsnachricht lassen sich in diesem Fall Signalisierungsverfahren einsetzen, die auch zum Signalisieren im durchschaltevermittelten Netz eingesetzt werden.

Bei einer nächsten Ausgestaltung sind die Folge-Signalisierungsnachricht und/oder die Standard-Signalisierungsnachricht Signalisierungsnachrichten gemäß ISUP-Standard (ISDN user part) der ITU-T. Der Kern des ISUP-Standards ist in den folgenden Standards festgelegt:
- Q.761 (12/99) "Signalling System Number 7 - ISDN user part functional description",
- Q.762 (2000) "Signalling System Number 7 - ISDN user part general function of messages and signals",
- Q.763 (1997) "Signalling System Number 7 - ISDN - user part formats and codes", und
- Q.764 (09/97) "Signalling System Number 7 - ISDN user part signalling procedures".

Bei einer anderen Weiterbildung ist die Folge-Signalisierungsnachricht dagegen eine für die Signalisierung innerhalb einer Vermittlungsstelle des durchschaltevermittelten Netzes festgelegte Signalisierungsnachricht. Signalisierungsnachrichten mit dem gleichen Aufbau wie die Folge-Signalisierungsnachricht werden innerhalb einer Vermittlungsstelle des durchschaltevermittelten Netzes auch zu Anschlusseinheiten gesendet, die keine Netzübergangsfunktionen erbringen, z.B. zu Anschlusseinheiten zum Anschluss von Teilnehmern, zu Anschlusseinheiten zum Anschluss von Nutzdatenübertragungsstrecken zu anderen Vermittlungsstellen und auch zwischen den genannten Einheiten untereinander. Das interne Signalisierungsprotokoll lässt sich somit für verschiedene Zwecke nutzen. Bei einer nächsten Weiterbildung wird die Netzübergangsfunktion mit Hilfe mindestens zweier räumlich getrennter Einheiten erbracht. Bei einer Ausgestaltung überträgt eine Netzübergangseinheit die Nutzdaten zwischen den verschiedenen Netzen. Eine die Netzübergangseinheit steuernde Steuereinheit ist von der Netzübergangseinheit räumlich entfernt aufgestellt und steuert die Netzübergangseinheit mit Hilfe eines festgelegten Steuerungsprotokolls. So wird das Protokoll gemäß ITU-T Standard H.248 "Gateway Control Protocol" oder gemäß Defacto-Standard RFC 2507 (Request For Comment) eingesetzt, das auch unter dem Namen MGCP (Media Gateway Control Protocol) bekannt ist. Durch diese Maßnahme lässt sich die Steuereinheit zum Steuern mehrerer Netzübergangseinheiten nutzen.

Bei einer nächsten Weiterbildung wird die Standard-Signalisierungsnachricht von einer Vermittlungsstelle des durchschaltevermittelten Netzes gesendet. Im Rahmen der Weiterbildung des erfindungsgemäßen Verfahrens wird nur die Signalisierungsfunktion der Vermittlungsstelle nicht aber deren Vermittlungsfunktion zum Vermitteln von Nutzdaten eingesetzt. Durch diese Maßnahme lassen sich viele Funktionen der Vermittlungsstelle auch für die Durchführung des erfindungsgemäßen Verfahrens oder einer seiner Weiterbildungen nutzen, die bisher für andere Zwecke eingesetzt worden sind, nämlich für das Vermitteln von Verbindungen im durchschaltevermittelten Netz ohne Einbeziehung des Paketübertragungsnetzes.

Bei einer Weiterbildung des erfindungsgemäßen Verfahrens wird die Folge-Signalisierungsnachricht von einer weiteren Vermittlungsstelle erzeugt, die räumlich von der ersten Vermittlungsstelle entfernt aufgestellt ist, z.B. mehr als hundert Kilometer. Durch diese Maßnahme lassen sich beispielsweise die Netze verschiedener Betreiber miteinander verbinden, um das erfindungsgemäße Verfahren durchzuführen.

Bei einer anderen Weiterbildung ist das Paketübertragungs-Netz ein gemäß Internetprotokoll arbeitendes Netz, z.B. das Internet. Es werden jedoch auch ATM-Netze zur Übertragung der Nutzdaten eingesetzt. Das durchschaltevermittelte Netz ist bei einer Weiterbildung ein Netz, in dem die Nutzdaten in Zeitkanälen gemäß einem Zeitmultiplexverfahren übertragen werden, z.B. gemäß PCM-Verfahren (Pulse Code Modulation), siehe Standard G.711 der ITU-T.

Im durchschaltevermittelten Netz wird bei einer nächsten Weiterbildung gemäß ISUP-Standard signalisiert. Das erfindungsgemäße Verfahren oder seine Weiterbildungen werden auch in außereuropäischen durchschaltevermittelten Netzen ausgeführt, z.B. in den USA oder in Japan. Die Signalisierung zum Teilnehmer im Paketübertragungs-Netz wird bei einer nächsten Weiterbildung gemäß H.323-Protokoll im weiteren Sinne ausgeführt, d.h. mit den eingangs genannten Standards dieser Protokollgruppe. Alternativ wird zur Signalisierung im Paketübertragungs-Netz das Protokoll SIP (Session Invocation Protocol) eingesetzt, das im Defacto-Standard RFC 2543 festgelegt ist.

Bei einer nächsten Weiterbildung liegt zwischen einer das Einschalten veranlassenden Vermittlungsstelle und einer Einheit zum Erbringen der Netzübergangsfunktion keine weitere oder mindestens noch eine weitere Vermittlungsstelle des durchschaltevermittelten Netzes im Signalisierungsweg und/oder im Übertragungsweg der Nutzdaten. Vorzugsweise veranlasst eine Ursprungsvermittlungsstelle das Einschalten. Die Ursprungsvermittlungsstelle ist die Vermittlungsstelle, an die das rufende Endgerät angeschlossen ist. Durch diese Maßnahme wird erreicht, dass die Teilnehmersignalisierung aufgrund des vergleichsweise kurzen Übertragungsweges das rufende Endgerät mit hoher Qualität erreicht, wenn in der das Einschalten veranlassenden Vermittlungsstelle ist nämlich auch eine Einheit zum Erzeugen des Teilnehmersignals untergebracht ist.

Alternativ wird das Teilnehmersignal in einer Einheit zum Übergeben von Nutzdaten zwischen den beiden Netzen eingespeist. Es lassen sich in diesem Fall zwischen Netzübergangsfunktion und rufendem Endgerät bisher übliche Vermittlungsstellen verwenden. Das Einspeisen in der Netzübergangseinheit ist außerdem einfach durchzuführen, z.B. über eine Steuerungsnachricht gemäß einem Steuerungsprotokoll.

Das Teilnehmersignal ist ein Rufton oder eine Ansage, die darauf hinweist, dass das gerufene Endgerät den Ruf für einen Teilnehmer signalisiert. In einigen Ländern wird nämlich an Stelle eines Ruftons eine Ansage eingespielt. Wird beispielsweise das Protokoll MGCP eingesetzt, so gibt es für den Rufton einen Parameter "rt" in einem sogenannten "Generic Media Package", siehe RFC 2705, Abschnitt 6.1.1. In einem sogenannten "Announcement Server Package" gibt es einen Parameter "ann", der für die Steuerung einer Ansage eingesetzt werden kann, siehe RFC 2705, Abschnitt 6.1.9.

Bei einer anderen Weiterbildung enthält die Folge-Signalisierungsnachricht eine Angabe, deren Wert davon abhängt, ob das Endgerät belegt oder besetzt ist. An Hand der Folge-Signalisierungsnachricht wird die Angabe zur Belegung und die Angabe zum Teilnehmersignal geprüft. Das Einschalten des Teilnehmersignals wird nur dann veranlasst, wenn das gerufene Endgerät frei ist und wenn noch kein Teilnehmersignal erzeugt worden ist. Durch diese Maßnahme lässt sich gewährleisten, dass das Teilnehmersignal beispielsweise auch durch das gerufene Endgerät erzeugt werden kann. Eine doppelte Einspielung des Teilnehmersignals wird aufgrund der Prüfung vermieden, weil die Angabe zum Teilnehmersignal einen Wert hat, bei dem die Bedingung nicht erfüllt ist. Außerdem wird durch die Prüfung verhindert, dass der Freiton eingespielt wird, wenn kein Freisignal erforderlich ist.

Die Erfindung betrifft außerdem eine Vermittlungsstelle, die so aufgebaut ist, dass bei ihrem Betrieb das erfindungsgemäße Verfahren oder eine seiner Weiterbildungen ausgeführt wird. Insbesondere veranlasst diese Vermittlungsstelle das Einschalten des Teilnehmersignals. Weiterhin betrifft die Erfindung ein Programm mit einer Befehlsfolge, bei deren Ausführung durch einen Prozessor das erfindungsgemäße Verfahren oder eine seiner Weiterbildungen ausgeführt wird. Für die Vermittlungsstelle und das Programm gelten die oben genannten technischen Wirkungen ebenfalls.

Im Folgenden werden Ausführungsbeispiele der Erfindung an Hand der beiliegenden Zeichnungen erläutert. Darin zeigen:
- Figur 1: eine Netzübergangsfunktion zwischen einem Telefonnetz und dem Internet,
- Figur 2: Signalisierungsnachrichten in einem Diensterbringungsrechner zum Erbringen eines Teils der Netzübergangsfunktion,
- Figur 3: eine Netzübergangsfunktion, die durch zwei räumlich voneinander getrennte Vermittlungsstellen und eine abgesetzte Netzübergangseinheit erbracht wird,
- Figur 4: den Aufbau eines Informationselementes zur Übertragung einer Internetadresse,
- Figur 5: den Aufbau eines Informationselementes zur Übertragung einer RTP-Portnummer,
- Figur 6: den Aufbau eines Codeelementes zur Bezeichnung der Rufinstanz, und
- Figur 7: eine Netzübergangsfunktion, die durch eine einzige Vermittlungsstelle und eine davon räumlich getrennte Netzübergangseinheit erbracht wird.

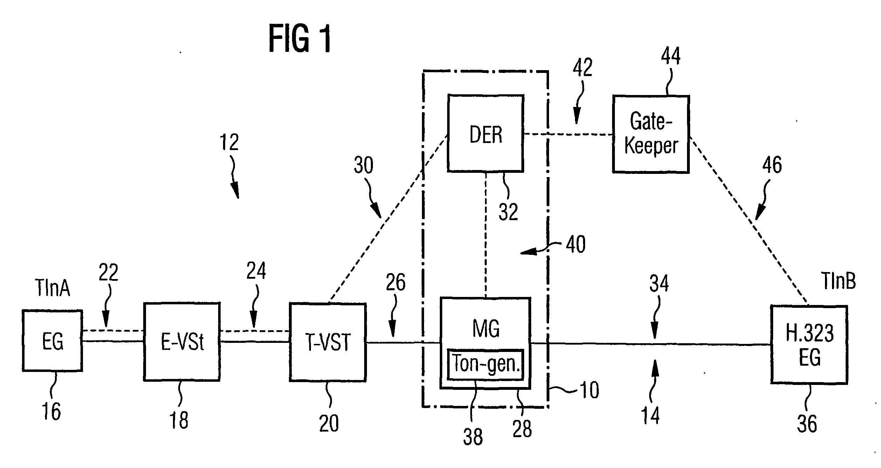

Figur 1 zeigt eine Netzübergangsfunktion 10 zwischen einem Telefonnetz 12 und einem Datenpaketübertragungsnetz 14. Das Telefonnetz 12 ist beispielsweise das Telefonnetz der deutschen Telekom AG. In Figur 1 sind ein Endgerät 16 eines rufenden Teilnehmers TlnA, eine Ursprungsvermittlungsstelle 18 und eine Transitvermittlungsstelle 20 des Telefonnetzes 12 dargestellt. Zwischen dem Endgerät 16 und der Ursprungsvermittlungsstelle 18 liegt eine Teilnehmeranschlussleitung 22. Die Teilnehmeranschlussleitung 22 ist beispielsweise ein ISDN-Basisanschluss. In Figur 1 deuten gestrichelte Linien Signalisierungsnachrichten an. Durchgezogene Linien sind Übertragungswege für Nutzdaten. Auf der Teilnehmeranschlussleitung 22 wird gemäß einem Teilnehmersignalisierungsprotokoll signalisiert, z.B. nach dem Protokoll DSS1 (Digital Signalling System Number One).

Die Ursprungsvermittlungsstelle 18 ist mit der Transit-Vermittlungsstelle 20 über eine PCM-30-Übertragungsstrecke 24 verbunden. Die Gesprächsdaten werden in einem Zeitkanal übertragen. Die Signalisierung wird gemäß ISUP-Protokoll ausgeführt. Die Ursprungsvermittlungsstelle 18 und die Transit-Vermittlungsstelle 20 sind beispielsweise herkömmliche Vermittlungsstellen vom Typ EWSD der Firma Siemens AG oder vom Typ S12 der Firma Alcatel AG.

Von der Transit-Vermittlungsstelle 20 führt eine PCM-30-Übertragunsstrecke 26 zum Übertragen der Nutzdaten zu einer Netzübergangseinheit 28, die einen Teil der Netzübergangsfunktion 10 erbringt. Eine Signalisierungsverbindung 30 liegt zwischen der Transit-Vermittlungsstelle und einem Diensterbringungsrechner 32, der ebenfalls einen Teil der Netzübergangsfunktion 10 erbringt. Auf der Signalisierungsverbindung 30 wird gemäß ISUP-Protokoll signalisiert.

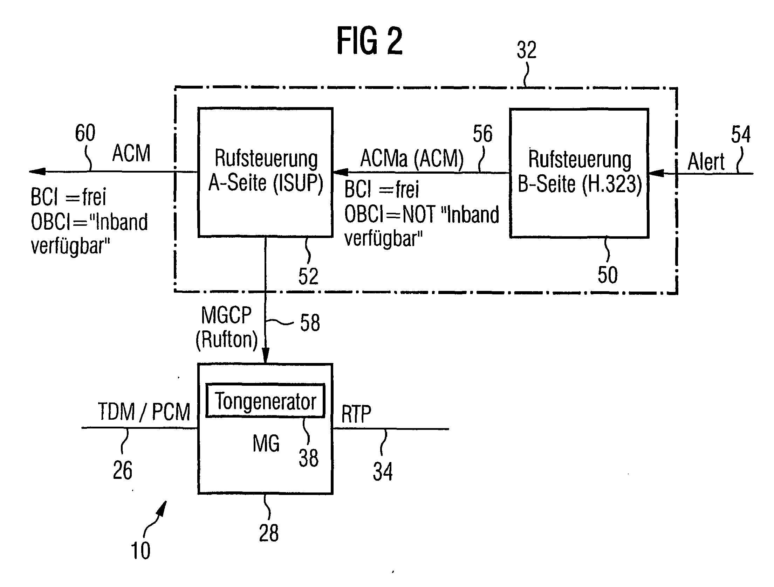

Die Netzübergangseinheit 28 entnimmt Sprachdaten, die in einem PCM-Kanal der Übertragungsstrecke 26 empfangen werden, und verpackt diese in Datenpakete, die im Datenpaketübertragungs-Netz 14 weitergeleitet werden, z.B. über einen Übertragungsweg 34, der von der Netzübergangseinheit beispielsweise durch das Internet zu einem Endgerät 36 eines Teilnehmers TlnB führt. Andererseits werden aus dem Datenpaketübertragungs-Netz 14 empfangene Datenpakete in der Netzübergangseinheit 28 entpackt. Die in den Datenpaketen enthaltenen Nutzdaten werden in einem Zeitkanal auf der PCM-30-Übertragungsstrecke 26 weitergeleitet. Die Netzübergangseinheit 28 enthält außerdem einen Tongenerator 38, der zum Erzeugen eines Ruftons dient. Die dazu erforderlichen Vorgänge werden unten an Hand der Figuren 2 bis 3 näher erläutert.

Der Diensterbringungsrechner 32 steuert die Netzübergangseinheit 28 mit Hilfe des Protokolls MGCP. Die Steuernachrichten werden über einen Übertragungsweg 40 übertragen, der beispielsweise durch das Internet verläuft. Weiterhin werden durch den Diensterbringungsrechner 32 Signalisierungsnachrichten, die vom Telefonnetz 12 kommen, in Signalisierungsnachrichten gemäß Standard H.323 im weiteren Sinne umgewandelt. Die umgewandelten Signalisierungsnachrichten werden über einen Übertragungsweg 42 zu einer Zugangseinheit 44 übertragen, beispielsweise über das Internet. Andererseits werden von der Zugangseinheit 44 kommende Signalisierungsnachrichten gemäß Protokoll H.323 im weiteren Sinne in Signalisierungsnachrichten des Telefonnetzes 12 umgewandelt und über die Signalisierungsverbindung 30 weitergeleitet.

Das Endgerät 36 ist beispielsweise ein Endgerät, das gemäß Standard H.323 im weiteren Sinne arbeitet. Dem Endgerät 36 ist die Zugangseinheit 44 zugeordnet. Zwischen Endgerät 36 und Zugangseinheit 44 lässt sich ein Signalisierungsweg 46 aufbauen, beispielsweise über ein lokales Datenübertragungsnetz.

Bei einem anderen Ausführungsbeispiel sind der Diensterbringungsrechner 32 und die Netzübergangseinheit 28 nicht räumlich voneinander getrennt. In diesem Fall lässt sich die Übertragungsstrecke 26 und die Signalisierungsverbindung 30 über eine gemeinsame Übertragungsstrecke führen, z.B. über eine Verbindungsleitung. Die im folgenden an Hand der Figuren 2 bis 4 erläuterten Vorgänge bleiben jedoch im wesentlichen gleich.

Figur 2 zeigt Signalisierungsnachrichten, die durch die Netzübergangsfunktion 10 bearbeitet und erzeugt werden. Die Funktionen des Diensterbringungsrechners 32 werden durch zwei voneinander getrennte Einheiten erbracht, nämlich eine B-seitige Rufsteuerung 50 und eine A-seitige Rufsteuerung 52. Empfängt die Rufsteuerung 50 beim Aufbau eines Übertragungsweges vom Teilnehmer TlnA zum Endgerät 36 eine Alert-Nachricht 54, die dem Standard H.323 im weiteren Sinne entspricht, so wird eine interne ACM-Nachricht 56 (Address Complete Message) erzeugt, deren Struktur an die im ISUP-Standard definierte ACM-Nachricht angelehnt ist. Die interne ACM-Nachricht 56 wird in Figur 2 durch die Buchstabenfolge ACMa dargestellt. Die ACM-Nachricht 56 enthält wie im Standard Q.763, Abschnitt 3.5, vorgesehen, einen BC-Indikator BCI (Backward Call Indicator), in dem ein Wert vermerkt ist, der den Frei-Zustand des Endgerätes 36 kennzeichnet. Außerdem enthält die ACM-Nachricht 56 einen OBC-Indikator OBCI (Optional Backward Call Indicator), siehe Standard Q.763, Abschnitt 3.37. Im OBC-Indikator ist ein Wert vermerkt, der angibt, dass keine Inband-Information verfügbar ist, d.h. dass aktuell kein Rufton eingespeist wird.

Die ACM-Nachricht 56 wird zur A-seitigen Rufsteuerung 52 übertragen und dort bearbeitet. Dabei wird zunächst geprüft, ob im OBC-Indikator ein Wert angegeben ist, der darauf hinweist, dass keine Inband-Information verfügbar ist, und ob im BC-Indikator BCI ein Wert für den Zustand "frei" vermerkt ist. Sind beide Bedingungen erfüllt, so wird von der Rufsteuerung 52 zur Netzübergangseinheit 28 eine Steuernachricht 58 gesendet, mit der das Einschalten des Ruftons angefordert wird. Das Einschalten des Ruftones wird in der Rufsteuerung 52 vermerkt.

Beim Bearbeiten der Steuernachricht 58 in der Netzübergangseinheit 28 wird der Tongenerator 38 eingeschaltet, so dass ein Ton in den zum Teilnehmer TlnA führenden übertragungskanal der Übertragungsstrecke 26 eingespeist wird. Nach dem Aktivieren des Tongenerators 38 wird von der Rufsteuerung 52 eine ACM-Nachricht 60 zur Transit-Vermittlungsstelle 20 gesendet. Die ACM-Nachricht 60 genügt dem Standard Q.763. Im BC-Indikator der ACM-Nachricht 60 ist ebenfalls vermerkt, dass das Endgerät 36 frei ist. In dem OBC-Indikator OBCI der ACM-Nachricht 60 ist dagegen vermerkt, dass eine Inband-Information nun verfügbar ist.

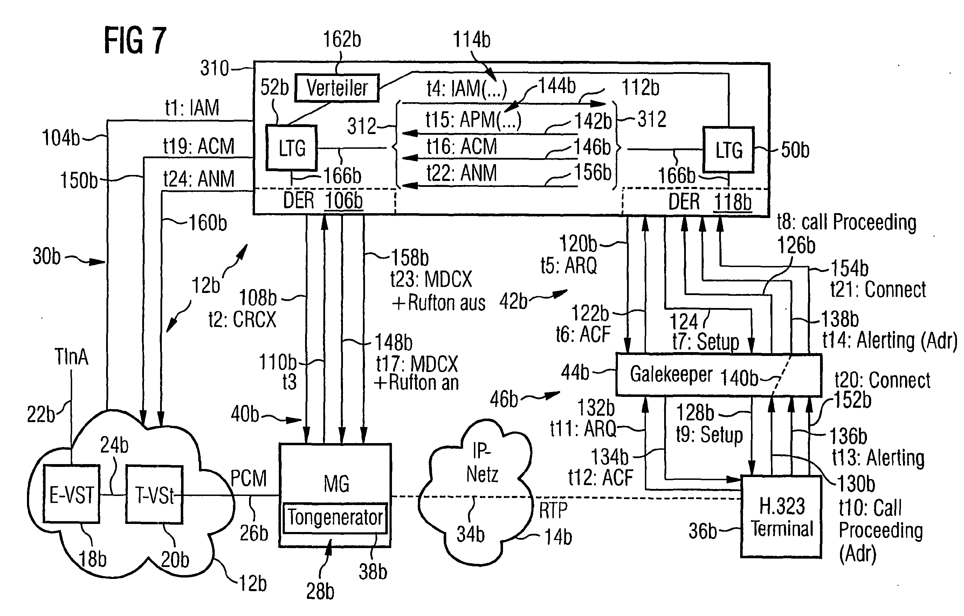

Trifft in der Rufsteuerung 52 eine nicht dargestellte ANM-Nachricht (Answer Message) ein, so wird der Rufton, falls das Einschalten für den Übertragungsweg vermerkt worden ist, mit Hilfe einer Steuernachricht abgeschaltet, die zur Netzübergangseinheit 28 gesendet wird. Bei der ANM-Nachricht handelt es sich ebenfalls um eine stark an den ISUP-Standard angelehnte Signalisierungsnachricht, die im Innern des Diensterbringungsrechners 32 übertragen wird. Figur 7 stellt die in Figur 2 erläuterten Vorgänge detaillierter dar.

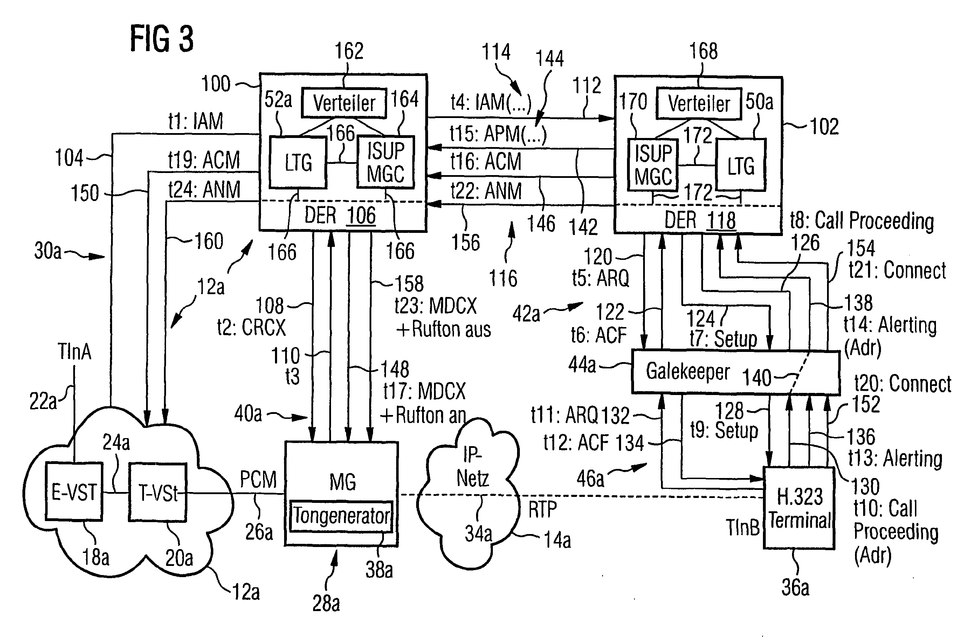

Bei einem anderen Ausführungsbeispiel besteht der Diensterbringungsrechner 32 aus zwei räumlich sehr weit voneinander getrennten Einheiten. Die eine Einheit enthält die Rufsteuerung 50 und die andere Einheit enthält die Rufsteuerung 52. An Stelle der ACM-Nachricht 56 wird eine ACM-Nachricht übertragen, die den ISUP-Standard in jeder Hinsicht erfüllt. Ein Beispiel für eine solche Nachricht wird im Folgenden an Hand der Figur 3 erläutert.

Figur 3 zeigt eine Netzübergangsfunktion, die durch zwei räumlich voneinander getrennte Vermittlungsstellen 100 und 102 sowie durch eine Netzübergangseinheit 28a erbracht wird.

In Figur 3 dargestellte Funktionseinheiten, die den gleichen Aufbau und die gleiche Funktion, wie bereits an Hand der Figuren 1 und 2 erläuterte Funktionseinheiten haben, sind in Figur 3 mit dem gleichen Bezugszeichen dargestellt, das jedoch zur Unterscheidung um den Kleinbuchstaben "a" ergänzt worden ist.

Im Folgenden werden Signalisierungsnachrichten zum Aufbau eines Übertragungsweges zur Übertragung von Sprachdaten zwischen den Teilnehmern TlnA und dem Teilnehmer TlnB erläutert. Beim Aufbau der Gesprächsverbindung erzeugt die Vermittlungsstelle 20a zu einem Zeitpunkt t1 protokollgemäß eine Verbindungsaufbaunachricht 104, auch IAM-Nachricht (Initial Address Message) genannt. Diese Nachricht enthält beispielsweise unter anderem die vollständige Rufnummer des Teilnehmers TlnB und die Nummer eines für die Übertragung zu nutzenden Zeitschlitzes auf der Übertragungsstrecke 26a. Die Vermittlungsstelle 20a arbeitet standardgemäß. Aufgrund der Rufnummer werden die Übertragungsstrecke 26a genutzt und Signalisierungsnachrichten zur Vermittlungsstelle 100 gesendet. In der Vermittlungsstelle 100 wird an des sogenannten CIC (Circuit Identifikation Code) erkannt, dass die Netzübergangseinheit 28a in die Verbindung einzubeziehen ist. Ein in der Vermittlungsstelle 100 enthaltener Diensterbringungsrechner 106 wird von einer Steuereinheit der Vermittlungsstelle 100 veranlasst, die zur Einbeziehung der Netzübergangseinheit 28a erforderlichen Schritte auszuführen.

Zu einem nach dem Zeitpunkt t1 liegenden Zeitpunkt t2 sendet der Diensterbringungsrechner 106 an die Netzübergangseinheit 28a über den Übertragungsweg 40a eine Verbindungsaufbaunachricht 108 gemäß Defacto-Standard RFC 2705. Die Verbindungsaufbaunachricht 108 wird auch als CRCX-Nachricht (Create Connection) bezeichnet. In der Verbindungsnachricht 108 ist der Zeitschlitz angegeben, der für die Nutzdatenübertragung genutzt werden soll. Unter anderem ist als CODEC (Codierung/Decodierung) für eine aufzubauende RTP-Verbindung das Verfahren gemäß Standard G.711 angegeben. Die Netzübergangseinheit 28a bearbeitet die Verbindungsaufbaunachricht 108 und erzeugt als Antwort zu einem Zeitpunkt t3 eine Antwortnachricht 110. Die Antwortnachricht 110 bestätigt zum einen den Empfang der Verbindungsaufbaunachricht 108 und enthält unter anderem eine Internetadresse und eine Portnummer, die für den Empfang von Nutzdaten auf dem zwischen der Netzübergangseinheit 28a und dem Endgerät 36a aufzubauenden Übertragungsweg 34a nutzbar ist. Als Übertragungsprotokoll auf dem Übertragungsweg 34a wird das Protokoll RTP (Real Time Protocol) gewählt, siehe Defacto-Standards RFC 1889 und RFC 1890.

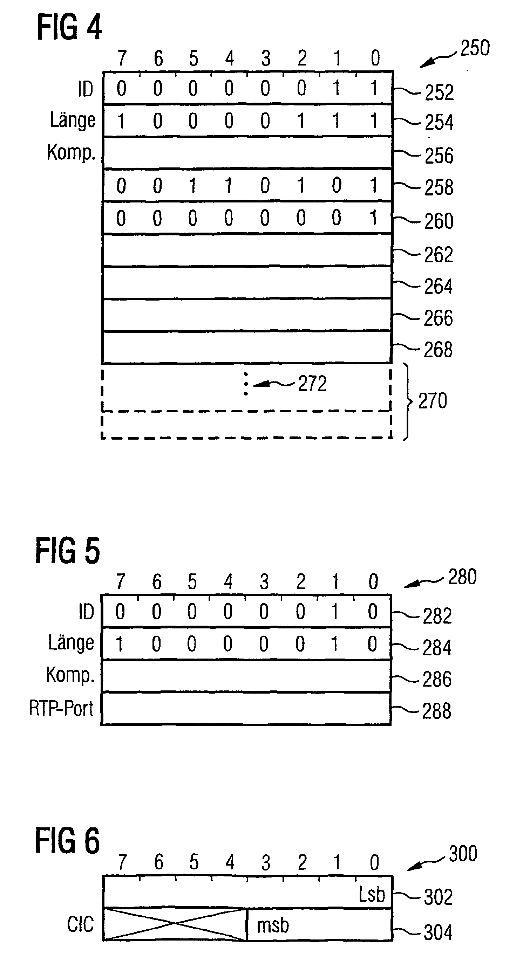

Der Diensterbringungsrechner 106 empfängt die Antwortnachricht 110 und leitet die empfangene Internetadresse sowie die Portnummer an die Steuereinheit der Vermittlungsstelle 100 weiter. Die Steuereinheit der Vermittlungsstelle 100 bearbeitet die Verbindungsaufbaunachricht 104 gemäß ISUP-Protokoll und erzeugt zu einem Zeitpunkt t4 eine Verbindungsaufbaunachricht 112. Die Verbindungsaufbaunachricht 112 wird gemäß ISUP-Protokoll auch als IAM-Nachricht (Initial Address Message) bezeichnet. In der Verbindungsaufbaunachricht 112 sind zwei unten an Hand der Figuren 4 und 5 näher erläuterte Informationselemente enthalten, in denen die Internetadresse und die Portnummer weitergeleitet werden, siehe Punkte 114. Diese Informationselemente sind nicht im ISUP-Standard festgelegt, werden jedoch unter Einhaltung dieses Standards über eine Signalisierungsverbindung 116 zur Vermittlungsstelle 102 übertragen. Die Informationselemente werden als Bestandteil von Signalisierungsnachrichten in einem Container APP (Applikation Association Transport) gemäß Standard Q.765 Add. 1 (08/00) übertragen.

Die Vermittlungsstelle 102 empfängt die Verbindungsaufbaunachricht 112 und bearbeitet auch die darin enthaltenen Informationselemente. Aufgrund des Inhalts dieser Informationselemente oder an Hand des Codes (CIC - Circuit Identification Code) zur Bezeichnung der Rufinstanz wird erkannt, dass keine übliche Telefonverbindung, sondern eine Telefonverbindung unter Verwendung des Datenpaketübertragungsnetzes 14a aufgebaut werden soll. Als zu nutzende Netzzugangseinheit auf der Seite des Teilnehmers TlnB wird die Netzzugangseinheit 44a ermittelt.

Ein in der Vermittlungsstelle 102 enthaltener Diensterbringungsrechner 118 wird durch die Steuereinheit der Vermittlungsstelle 102 veranlasst, eine Internetverbindung über den Übertragungsweg 42a zur Netzzugangseinheit 44a aufzubauen. Zu einem Zeitpunkt t5 sendet der Diensterbringungsrechner 118 eine ARQ-Nachricht 120 (Admission Request), siehe Standard H.323, insbesondere Abschnitt 8.1.2 "Both endpoints registered to the same Gatekeeper", einschließlich Figur 15 des Standards H.323. Die ARQ-Nachricht wird in der Netzzugangseinheit 44a standardgemäß bearbeitet. Zu einem Zeitpunkt t6 erzeugt die Netzzugangseinheit 44a standardgemäß eine ACF-Nachricht 122, die an den Diensterbringungsrechner 18 zu einem Zeitpunkt t6 gesendet wird. In der ACF-Nachricht 122 fügt die Netzzugangseinheit eine Adresse an, die für die folgende Signalisierung zu verwenden ist. Der Diensterbringungsrechner 118 sendet zu einem Zeitpunkt t7 eine standardgemäße Setup-Nachricht 124 an die in der Nachricht 122 enthaltene Adresse der Netzzugangseinheit 44a. Setup-Nachricht 124 enthält ein Informationselement, das auf einen Schnellstart hinweist, der auch Fast-Start genannt wird. In einem Informationselement der Setup-Nachricht 124 wird die Internetadresse und die Portnummer übermittelt, die zuvor in der Vermittlungsstelle 102 empfangen worden sind. Die genannten Informationselemente der Setup-Nachricht 124 sind im Standard H.225, insbesondere im Abschnitt 7.3.10, näher erläutert.

Beim Bearbeiten der Setup-Nachricht 124 erzeugt die Netzzugangseinheit 44a protokollgemäß zu einem Zeitpunkt t8 eine Call-Proceeding-Nachricht 126 für den Diensterbringungsrechner 118. Außerdem werden die in der Setup-Nachricht 124 enthaltenen Informationselemente entnommen und zu einem Zeitpunkt t9 in einer protokollgemäßen Setup-Nachricht 128 an das Endgerät 36a weitergeleitet. In der Setup-Nachricht 128 ist ebenfalls ein Parameter für den Schnellstart angegeben. Beim Empfang der Setup-Nachricht 128 im Endgerät 36a wird protokollgemäß zu einem Zeitpunkt t10 eine Call-Proceeding-Nachricht 130 für die Netzzugangseinheit 44a erzeugt. Die Call-Proceeding-Nachricht 130 enthält ebenfalls Angaben für den Schnellstart, nämlich die für den aufzubauenden RTP-Übertragungsweg 34a auf der Seite des Endgeräts 36a zu nutzende Internetadresse sowie die zu nutzende Portadresse. Diese Angaben werden in der Netzzugangseinheit 44a zunächst gespeichert.

Zu einem Zeitpunkt t11 wird vom Endgerät 36a eine ARQ-Nachricht 132 gesendet, um die Zustimmung für die nachfolgenden Übertragungsvorgänge zu erhalten. Diese Zustimmung wird zu einem Zeitpunkt t12 mit Hilfe einer protokollgemäßen ACF-Nachricht von der Netzzugangseinheit 44a erteilt. Nach dem Empfang der ACF-Nachricht 134 sendet das Endgerät 36a zu einem Zeitpunkt t13 eine Alerting-Nachricht 136 an die Netzzugangseinheit 44a und erzeugt gleichzeitig einen Signalton, um den Teilnehmer TlnB auf den ankommenden Ruf aufmerksam zu machen.

Beim Empfang der Alerting-Nachricht 136 in der Netzzugangseinheit 44a wird eine Alerting-Nachricht 138 erzeugt. In die Alerting-Nachricht 138 werden die zum Zeitpunkt t10 übermittelte Adresse und die Portnummer eingebunden, siehe gestrichelte Linie 140. Die Alerting-Nachricht 138 wird zu einem Zeitpunkt t14 von der Netzzugangseinheit 44a zum Diensterbringungsrechner 118 gesendet.

In der Vermittlungsstelle 102 wird beim Bearbeiten der Alerting-Nachricht 138 eine Tansportnachricht 142 erzeugt, die gemäß ISUP-Protokoll auch als APM-Nachricht (Application Transport Message) bezeichnet wird. Die Transportnachricht 142 enthält Informationselemente mit der Internetadresse und der Portnummer des Endgerätes 36a, siehe Punkte 144. Die Informationselemente haben die gleiche Struktur wie die unten an Hand der Figuren 4 und 5 erläuterten Informationselemente. Die Tansportnachricht 142 wird zu einem Zeitpunkt t15 an die Vermittlungsstelle 100 übertragen.

Die Steuereinheit der Vermittlungsstelle 100 extrahiert aus der Tansportnachricht 142 die Internetadresse und die Portnummer. Anschließend wartet die Vermittlungsstelle 100 auf das Eintreffen einer folgenden ACM-Nachricht 146.

Aufgrund der zum Zeitpunkt t14 empfangenen Alerting-Nachricht 138 erzeugt die Vermittlungsstelle 102 zu einem Zeitpunkt t16 gemäß ISUP-Standard eine ACM-Nachricht 146 (Address Complete Message). Der BC-Indikator BCI dieser Nachricht enthält einen Wert, der darauf hinweist, dass das Endgerät 36a frei ist. Der OBC-Indikator OBCI der ACM-Nachricht 146 enthält einen Wert, der anzeigt, dass keine Inband-Information, d.h. kein Rufton, verfügbar ist.

Die ACM-Nachricht 146 wird in der Vermittlungsstelle 100 protokollgemäß bearbeitet. Die an Hand der Figur 2 erläuterte Bedingung wird geprüft. Es wird festgestellt, dass die auf die Datenfelder BCI und OBCI bezogenen Bedingungen erfüllt sind. Deshalb veranlasst die Steuereinheit den Diensterbringungsrechner 106, für die Anschaltung des Ruftons in der Netzübergangseinheit 28a zu sorgen. Das Anschalten eines Ruftons wird außerdem in der Vermittlungsstelle 100 für den aufzubauenden Übertragungsweg 34a vermerkt.

Zu einem Zeitpunkt t17 erzeugt der Diensterbringungsrechner 106 eine Änderungsnachricht 148 gemäß Defacto-Standard RFC 2705. Die Änderungsnachricht 148 wird auch als MDCX-Ivachricht (Modify Connection) bezeichnet. Die Änderungsnachricht 148 enthält die Internetadresse und die Portnummer des Endgeräts 36a für den RTP-Übertragungsweg 34a. Außerdem ist in der Änderungsnachricht 128 ein Datenfeld enthalten, mit dem die Anschaltung des Ruftons angefordert wird.

Der Rufton lässt sich mit Hilfe des Parameters "rt" aus dem "Generic Media Package" anschalten, siehe RFC 2705, Abschnitt 6.1.1. Auf das Paket lässt sich über die folgenden Parameter Bezug nehmen:
- die Änderungsnachricht 128 enthält einen Parameter "Encapsulated NotificationRequest", also eine eingekapselte Benachrichtigungsanforderung, siehe RFC 2705, Abschnitt 2.3.4 "ModifyConnection",
- die Benachrichtigungsanforderung enthält einen Parameter "RequestedEvents", siehe RFC 2705, Abschnitt 2.3.2 "NotificationRequest",
- von dem Parameter "RequestedEvents" gelangt man über die Kette "requestedEvent", "eventName", "packageName" zu der Angabe für das Paket und schließlich zur Angabe des Parameters "rt" und seines Wertes, siehe RFC 2705, Abschnitt 3.4 "Formal syntax description of the protocol"

Bei der Bearbeitung der Änderungsnachricht 148 in der Netzübergangseinheit 28a wird der für den Verbindungsaufbau genutzte Zeitschlitz auf der Übertragungsstrecke 26a den übermittelten Zielparametern des Endgeräts 36a zugeordnet. Außerdem wird der Tongenerator 38a so angesteuert, dass zum Teilnehmer TlnA ein Rufton gesendet wird, der diesem anzeigt, dass das Endgerät 36a den Teilnehmer TlnB ruft. Eine von der Netzübergangseinheit 28a erzeugte Antwortnachricht auf die Änderungsnachricht 148 ist in Figur 3 nicht dargestellt.

Beim Bearbeiten der ACM-Nachricht 146 erzeugt die Vermittlungsstelle 100 außerdem eine ACM-Nachricht 150, die zu einem Zeitpunkt t19 an die Transitvermittlungsstelle 20a gesendet wird. Der in der ACM-Nachricht 150 enthaltene BC-Indikator BCI hat einen Wert, der anzeigt, dass das gerufene Endgerät 36a frei ist. Der OBC-Indikator OBCI der ACM-Nachricht 150 hat einen Wert, der anzeigt, dass jetzt eine Inband-Information verfügbar ist, d.h. dass ein Rufton bereits angelegt worden ist.

Meldet sich der Teilnehmer TlnB mit Hilfe des Endgerätes 36a, so wird vom Endgerät 36a zu einem Zeitpunkt t20 eine Connect-Nachricht 152 erzeugt und an die Netzzugangseinheit 44a gesendet. Die Netzzugangseinheit 44a erzeugt ihrerseits aufgrund der Connect-Nachricht 152 eine Connect-Nachricht 154, die zu einem Zeitpunkt t21 an den Diensterbringungsrechner 118 gesendet wird. In der Vermittlungsstelle 102 wird nach dem Empfang der Connect-Nachricht 154 eine gemäß ISUP-Standard vorgesehene ANM-Nachricht 156 (Answer Message) erzeugt. Aufgrund dieser Nachricht beginnt die Gebührenpflicht.

In der Vermittlungsstelle 100 wird die ANM-Nachricht 156 bearbeitet. Die Vermittlungsstelle 100 prüft anhand des Vermerks, ob das Anschalten des Ruftones durch sie veranlasst worden ist. Wenn sie das Anschalten veranlasst hat, so steuert sie den Diensterbringungsrechner 106 so an, dass der Diensterbringungsrechner 106 die Ausschaltung des Ruftons anfordert. Dazu sendet der Diensterbringungsrechner zu einem Zeitpunkt t23 eine Änderungsnachricht 158, die gemäß Defacto-Standard RFC 2307 auch als MDCX-Nachricht bezeichnet wird. In der Änderungsnachricht 158 ist ein Datenfeld enthalten, in dem die Deaktivierung des Ruftons angefordert wird. Beim Bearbeiten der Änderungsnachricht 158 in der Netzübergangseinheit 28a wird der Tongenerator 38a ausgeschaltet. Ansonsten unterbleibt das Ausschalten.

Außerdem wird in der Vermittlungsstelle 100 beim Bearbeiten der ANM-Nachricht 156 die im ISUP-Standard vorgesehene ANM-Nachricht 160 an die nächste Vermittlungsstelle, d.h. an die Transitvermittlungsstelle 20a, weitergeleitet. Die weitere

Übertragung der Sprachdaten erfolgt wie im ISUP-Standard bzw. wie in der Standardgruppe zum Standard H.323 vorgesehen.

Bei einem anderen Ausführungsbeispiel wartet die Netzzugangseinheit 44a mit dem Aussenden der Call-Proceeding-Nachricht 126, bis die Call-Proceeding-Nachricht 130 vom Endgerät 36a eingetroffen ist. Die Internetadresse und die Portnummer werden dann gleich mit der Call-Proceeding-Nachricht 126 weitergeleitet. Dies erlaubt es, die APM-Nachricht 142 frühzeitig abzusenden. An Stelle der Änderungsnachricht 148 werden zwei getrennte Änderungsnachrichten erzeugt, von denen die zweite Änderungsnachricht zur Anschaltung des Ruftons dient.

Bei einem weiteren Ausführungsbeispiel wird die Internetadresse und die Portnummer erst mit der Connect-Nachricht 152 zur Netzzugangseinheit 44a weitergeleitet. Die Adressangaben werden in die Connect-Nachricht 154 übernommen und zur Vermittlungsstelle 102 übermittelt. Die APM-Nachricht 142, die ACM-Nachricht 146 und die ANM-Nachricht 156 werden erst nach dem Eintreffen der Connect-Nachricht 154 gesendet. Die anderen Vorgänge bleiben unverändert.

In Figur 3 sind außerdem Funktionseinheiten zur Steuerung der Vermittlungsstelle 100 bzw. zur Steuerung der Vermittlungsstelle 102 dargestellt. Die Vermittlungsstelle 100 enthält eine Verteilfunktion 162, die gemäß Standard Q.704 der ITU-T arbeitet. Außerdem gibt es eine ISUP-Baugruppe 164, die die Informationselemente bearbeitet, die zwischen den Vermittlungsstellen 100 und 102 zum Übermitteln der Internetadressen und der Portnummern übertragen werden. Die A-seitige Rufsteuerung 52a ist mit der ISUP-Baugruppe 164 über ein internes Signalisierungsprotokoll 166 der Vermittlungsstelle 100 verbunden. Auch zwischen dem Diensterbringungsrechner 106 und der A-seitigen Rufsteuerung 52a bzw. zwischen der ISUP-Baugruppe 164 und dem Diensterbringungsrechner 106 werden Nachrichten gemäß dem internen Signalisierungsprotokoll 166 ausgetauscht.

Ebenso enthält die Vermittlungsstelle 102 eine Verteilfunktion 168, die im Standard Q.704 der ITU-T festgelegte Funktionen übernimmt. Als Partnerbaugruppe zur Baugruppe 164 ist in der Vermittlungsstelle 102 eine ISUP-Baugruppe 170 enthalten, die die Informationselemente bearbeitet bzw. erzeugt, die zum Signalisieren der Internetadresse und der Portnummer erforderlich sind. Zwischen der B-seitigen Rufsteuerung 50a und der ISUP-Baugruppe 170 wird ein internes Signalisierungsprotokoll zum Austausch von Signalisierungsnachrichten genutzt, das wie das interne Signalisierungsprotokoll 166 sehr stark an das ISUP-Protokoll angelehnt ist. Das interne Signalisierungsprotokoll 172 dient auch zum Austausch von Signalisierungsnachrichten zwischen der Baugruppe 170 und dem Diensterbringungsrechner 118 bzw. zwischen der B-seitigen Rufsteuerung 50a und dem Diensterbringungsrechner 118.

Figur 4 zeigt den Aufbau eines Informationselementes 150 zur Übertragung einer Internetadresse. Das Informationselement 250 enthält bei einem ersten Ausführungsbeispiel neun aufeinanderfolgende Datenfelder 252 bis 268, die jeweils eine Länge von acht Bit haben, d.h. von einem Byte. Bitpositionen 0 bis 7 liegen in dieser Reihenfolge von rechts nach links. Im Datenfeld 252 wird ein Kennzeichen zur Kennzeichnung des Informationselementes 250 übertragen. Das Kennzeichen hat den Wert 3, der im Standard Q.765.5 zum Hinweis auf sogenannte "Interworking Function Address" dient und der hier anzeigt, dass das Informationselement 250 zur Übertragung einer Internetadresse dient.

In einem Datenfeld 254 wird die Länge des Informationselementes 250 abzüglich der Datenfelder 252 und 254 angegeben. Im Ausführungsbeispiel ist im Datenfeld 254 der Wert Sieben binär gespeichert, siehe auch Standard Q.765.5, Abschnitt 11.1.1.

In dem Datenfeld 256 wird eine Kompatibilitätsinformation übertragen, deren Wert dem Empfänger anzeigt, was zu tun ist, wenn er das Informationselement 250 nicht vollständig bearbeiten kann, siehe auch Standard Q.765.5, Abschnitt 11.1.1.

Im Datenfeld 258 wird ein Berechtigungs- und Formatkennzeichen übertragen, das in hexadezimaler Schreibweise den Wert "35" hat. Dieser Wert wird gemäß Standard X.213 Anhang A der ITU als Hinweis auf das Internetprotokoll verwendet.

Im Datenfeld 260 ist ein Kennzeichen mit dem Wert Eins gespeichert, wenn eine Internetadresse gemäß Internetprotokoll Version 4 übertragen wird. In den sich anschließenden Datenfeldern 262 bis 268 werden dann die vier Byte der Internetadresse gemäß Version 4 des Internetprotokolls übertragen.

Soll dagegen mit Hilfe des Informationselementes 250 eine Internetadresse gemäß Internetprotokoll Version 6 übertragen werden, so gibt es eine Abweichung in der Längenangabe, siehe Datenfeld 254 und eine Abweichung im Datenfeld 260. Im Datenfeld 260 wird bei der Übertragung von Internetadressen gemäß Internetprotokoll Version 6 der Wert Null übertragen. In diesem Fall schließen sich an das Datenfeld 260 sechzehn Datenfelder 262 bis 270 an, in denen die 16 Byte der Internetadresse gemäß Internetprotokoll Version 6 gespeichert sind, siehe auch Punkte 272.

Figur 5 zeigt den Aufbau eines Informationselementes 280 zur Übertragung einer Portnummer. Das Informationselement 280 enthält vier Datenfelder 282 bis 288 von jeweils einem Byte Länge. Die Bedeutung der Datenfelder 282 bis 286 entspricht in dieser Reihenfolge der Bedeutung der Datenfelder 252 bis 256 des Informationselementes 250. Im Datenfeld 282 wird der Wert Zwei übertragen, um das Informationselement 280 als Informationselement zur Übertragung einer Portnummer zu kennzeichnen. Das im Datenfeld 282 übertragene Kennzeichnen wird abweichend von der hier erbrachten Funktion im Standard Q.765.5 als "backbone network connection identifier' bezeichnet. In einem Datenfeld 284 wird der Wert Zwei als Länge des Informationselementes 280 abzüglich der Datenfelder 282 und 284 übertragen. Im Datenfeld 286 wird eine Information zur Kompatibilität übertragen. Im Datenfeld 288 wird dann die zu übertragende Portnummer übertragen, z.B. die in der Netzzugangseinheit 28a bzw. im Endgerät 36a für die RTP-Verbindung zu nutzende Portnummer, siehe Figur 3.

Figur 6 zeigt den Aufbau eines Codeelementes 300, das zur Bezeichnung von Rufinstanzen zwischen den Vermittlungsstellen 100 und 102 eingesetzt wird, siehe Figur 3. Der Aufbau des Codeelementes 300 ist im Standard Q.763, Abschnitt 1.2 festgelegt. Das Codeelement 300 enthält zwei Datenfelder 302 und 304 mit jeweils einer Länge von einem Byte. Die Nummer der Instanz wird beginnend mit dem niederwertigsten Bit im Datenfeld 302, siehe Bitposition 0, bis zur Bitposition 7 des Datenfeldes 302 und dann weiter zwischen den Bitpositionen 0 bis 3 des Datenfeldes 304 übertragen. Die Bitpositionen 4 bis 7 des Datenfeldes 304 werden nicht zur Bezeichnung der Instanz genutzt. Das Codeelement 300 hat keine weiteren Datenfelder.

Figur 7 zeigt eine Netzübergangsfunktion, die durch eine Vermittlungsstelle 310 und eine davon räumlich getrennte Netzübergangseinheit 28b erbracht wird. In Figur 7 gezeigte Funktionselemente, die im wesentlichen den gleichen Aufbau und die gleiche Funktion wie bereits an Hand der Figuren 1 bis 3 erläuterte Funktionselemente haben, sind in Figur 7 durch das gleiche Bezugszeichen, jedoch mit dem nachgestellten Kleinbuchstaben "b" dargestellt. Die Rufsteuerungen 52b und 50b sind in derselben Vermittlungsstelle 310 untergebracht. Außerdem sind die beiden Diensterbringungsrechner 106b und 118b in derselben Vermittlungsstelle 310 eingebaut. Es gibt nur ein internes Signalisierungsprotokoll 166b in der Vermittlungsstelle 310. Die Nachrichten 112b, 142b, 146b und 156b werden an Stelle der Nachrichten 112, 142, 146 bzw. 156 mit Hilfe des internen Signalisierungsprotokolls 166b zwischen der Rufsteuerung 50b und der Rufsteuerung 52b ausgetauscht, siehe Klammern 312. Im übrigen gelten die oben an Hand der Figur 3 erläuterten Vorgänge ebenso für die Figur 7.

Bei einem anderen Ausführungsbeispiel ist auch die Netzübergangseinheit 28b in der Vermittlungsstelle 310 enthalten. In diesem Fall wird auch für die Übermittlung von Nachrichten zwischen dem Diensterbringungsrechner 106b und der Netzübergangseinheit 28b das interne Signalisierungsprotokoll 166b der Vermittlungsstelle 310 eingesetzt.

Bei einem nächsten Ausführungsbeispiel wird an Stelle des Protokolls der Protokollfamilie H.323 zwischen den auf der rechten Seite der Figur 7 dargestellten Einheiten 36b, 44b und 118b das Protokoll SIP (Session Invocation Protocol) gemäß RFC 2543 oder ein anderes geeignetes Protokoll eingesetzt.

An Stelle des gemäß Internetprotokoll arbeitenden Datenpaketübertragungs-Netzes 14, 14a bzw. 14b wird bei einer anderen Ausgestaltung ein ATM-Netz eingesetzt. In diesem Fall wird zur Signalisierung zwischen den Vermittlungsstellen 100 und 102 das Protokoll BICC aus dem Standard Q.1901 der ITU-T eingesetzt. Aber auch bei einem IP-Netz lässt sich das Protokoll BICC zur Signalisierung nutzen.

Die in den Ausführungsbeispielen genannten Komponenten sind beispielsweise Komponenten des Systems SURPASS der SIEMENS AG, siehe WEB-Seite www.siemens.com/data&voice. So sind die Diensterbringungsrechner Bestandteil der Komponente hiQ des Systems SURPASS.

## Patentansprüche

1. Verfahren zum Einschalten eines Teilnehmersignals (38), bei dem von einem rufenden Endgerät (16) eines durchschaltevermittelten Telekommunikations-Netzes (12) unter Einbeziehung einer Netzübergangsfunktion (10) ein Übertragungsweg (34) zu einem gerufenen Endgerät (36) eines Paketübertragungs-Netzes (14) festgelegt wird,
bei dem von der Seite des gerufenen Endgerätes (36) eine für das Paketübertragungs-Netz (14) festgelegte Signalisierungsnachricht (54, 138) kommt, die anzeigt, dass das gerufene Endgerät (36) den Ruf einem Teilnehmer (TlnB) signalisiert,
bei dem beim Auftreten der für das Paketübertragungs-Netz (14) festgelegten Signalisierungsnachricht (54) eine Folge-Signalisierungsnachricht (56) erzeugt wird, die anzeigt, dass noch kein Teilnehmersignal (38) für das rufende Endgerät (36) erzeugt worden ist, oder die eine diesbezügliche Angabe (OBCI) enthält,
bei dem die Folge-Signalisierungsnachricht (56) bearbeitet wird, wobei das Einschalten des Teilnehmersignals (38) für das rufende Endgerät (16) veranlasst wird,
und wobei eine für das durchschaltevermittelte Netz (12) festgelegte Standard-Signalisierungsnachricht (60) erzeugt wird, die anzeigt, dass bereits ein Teilnehmersignal (38) für das rufende Endgerät erzeugt wird.

2. Verfahren nach Anspruch 1, **dadurch gekennzeichnet, dass** die Folge-Signalisierungsnachricht (56) eine für das durchschaltevermittelte Netz (12) festgelegte Signalisierungsnachricht ist, mit der angezeigt wird, dass ausreichend Wahlziffern gesendet worden sind.

3. Verfahren nach Anspruch 1 oder 2, **dadurch gekennzeichnet, dass** die Standard-Signalisierungsnachricht (60) und/oder die Folge-Signalisierungsnachricht (56) eine Signalisierungsnachricht ist, die eine im ISUP-Standard oder eine im BICC-Standard oder eine in einem auf einem dieser Standards aufbauenden Standard festgelegte Struktur hat.

4. Verfahren nach einem der vorhergehenden Ansprüche, **dadurch gekennzeichnet, dass** die Folge-Signalisierungsnachricht (56) eine für die Signalisierung innerhalb einer Vermittlungsstelle (310) des durchschaltevermittelten Netzes (12) festgelegte Signalisierungsnachricht ist,
und/oder dass Signalisierungsnachrichten mit dem gleichen Aufbau wie die Folge-Signalisierungsnachricht (56) in einer Vermittlungsstelle (310) des durchschaltevermittelten Netzes (12) zu verschiedenen Anschlusseinheiten gesendet werden, vorzugsweise zu Anschlusseinheiten zum Anschluss von Teilnehmern und/oder zu Anschlusseinheiten zum Anschluss von Nutzdaten-Übertragungsstrecken zu anderen Vermittlungsstellen des durchschaltevermittelten Netzes (12) und/oder zu Anschlusseinheiten zum Erbringen der Netzübergangsfunktion.

5. Verfahren nach einem der vorhergehenden Ansprüche, **dadurch gekennzeichnet, dass** die Netzübergangsfunktion (10) mit Hilfe mindestens zweier räumlich getrennter Einheiten erbracht wird.

6. Verfahren nach Anspruch 5, **dadurch**
**gekennzeichnet, dass** eine Netzübergangseinheit (28) die Nutzdaten zwischen den Netzen (12, 14) überträgt,
und dass die Netzübergangseinheit (28) durch eine vorzugsweise räumlich entfernte Steuereinheit gesteuert wird, vorzugsweise über ein festgelegtes Steuerungsprotokoll, insbesondere gemäß Protokoll H.248 oder gemäß Protokoll MGCP oder gemäß einem auf einem dieser Protokolle aufbauenden Protokoll.

7. Verfahren nach Anspruch 5 oder 6, **dadurch gekennzeichnet,dass** eine Vermittlungsstelle (100) des durchschaltevermittelten Netzes (12) die Standard-Signalisierungsnachricht (150) sendet.

8. Verfahren nach Anspruch 7, **dadurch gekennzeichnet, dass** eine weitere, vorzugsweise räumlich entfernte, Vermittlungsstelle (102) des durchschaltevermittelten Netzes (12) die Folge-Signalisierungsnachricht (142) erzeugt.

9. Verfahren nach einem der vorhergehenden Ansprüche, **dadurch gekennzeichnet, dass** das Paketübertragungs-Netz (14) ein gemäß Internetprotokoll arbeitendes Netz, ein gemäß ATM-Protokoll oder ein gemäß einem auf einem dieser Protokolle aufbauenden Protokoll arbeitendes Netz ist,
und/oder dass das durchschaltevermittelte Netz (12) ein Netz ist, in dem Daten in Zeitkanälen gemäß einem Zeitmultiplexverfahren übertragen werden,
und/oder dass im durchschaltevermittelten Netz (12) gemäß ISUP-Standard oder gemäß einem auf diesem Standard aufbauenden Standard signalisiert wird,
und/oder dass im Paketübertragungs-Netz (14) gemäß H.323-Protokoll, gemäß SIP-Protokoll oder gemäß einem auf einem dieser Protokolle aufbauenden Protokoll signalisiert wird.

10. Verfahren nach einem der vorhergehenden Ansprüche, **dadurch gekennzeichnet,dass** zwischen einer das Einschalten des Teilnehmersignals (38) veranlassenden Vermittlungsstelle und einer Einheit der Netzübergangsfunktion (10) keine oder mindestens noch eine weitere Vermittlungsstelle des durchschaltevermittelten Netzes (12) im Signalisierungsweg und/oder im Übertragungsweg liegt,
und/oder dass die das Einschalten veranlassende Vermittlungsstelle eine Ursprungsvermittlungsstelle (18) ist, an die das rufende Endgerät (16) angeschlossen ist.

11. Verfahren nach einem der Ansprüche 1 bis 9, **dadurch gekennzeichnet, dass** das Teilnehmersignal (38) in einer Einheit (28) zum Übergeben von Nutzdaten zwischen den Netzen (12, 14) eingespeist wird.

12. Verfahren nach einem der vorhergehenden Ansprüche, **dadurch gekennzeichnet, dass das** Teilnehmersignal (38) ein Rufton oder eine Ansage ist, die bzw. der darauf hinweist, dass das gerufene Endgerät (36) den Ruf für einen Teilnehmer (TlnB) signalisiert.

13. Verfahren nach einem der vorhergehenden Ansprüche, **dadurch gekennzeichnet, dass** die Folge-Signalisierungsnachricht (56) eine Angabe BCI) enthält, deren Wert davon abhängt, ob das gerufene Endgerät (36) belegt oder besetzt ist,
dass an Hand der Folge-Signalisierungsnachricht (56) die Angabe (BCI) zur Belegung und die Angabe (OBCI) zum Teilnehmersignal (38) geprüft werden,
und dass das Einschalten des Teilnehmersignals (38) nur dann veranlasst wird, wenn das gerufene Endgerät (36) frei ist und wenn noch kein Teilnehmersignal (38) erzeugt worden ist.

14. Vermittlungsstelle (100), die Mittel zur Durchführung der in einem der vorhergehenden Ansprüche angagebenen Verfahrensschritte aufweist

15. Programm mit einer Befehlsfolge, bei deren Ausführung durch einen Prozessor ein Verfahren nach einem der Ansprüche 1 bis 13 ausgeführt wird.

## Claims

1. A method for switching on a subscriber signal (38), in which a transmission path (34) from a calling terminal device (16) of a switched-through telecommunications network (12) to a called terminal device (36) of a packet transmission network (14) is defined using a network gateway function (10),
in which a signaling message (54, 138) which is defined for the packet transmission network (14) comes from the called terminal device (36) end and indicates that the called terminal device (36) is signaling the call to a subscriber (TlnB), in which, when the signaling message (54) which is defined for the packet transmission network (14) occurs, a hollowing signaling message (56) is generated which indicates that a subscriber signal (38) has not yet been generated for the calling terminal device (36), or which contains an indicator (OBCI) in this respect,
in which the following signaling message (56) is processed, the switching-on of the subscriber signal (38) for the calling terminal device (16) being brought about,
and a standard signaling message (60) which is defined for the switched-through network (12) and which indicates that a subscriber signal (38) has already been generated for the calling terminal device being generated.

2. The method as claimed in claim 1, **characterized in that** the following signaling message (56) is a signaling message which is defined for the switched-through network (12) and with which it is indicated that sufficient dialing digits have been transmitted.

3. The method as claimed in claim 1 or 2, **characterized in that** the standard signaling message (60) and/or the following signaling message (56) is a signaling message which has a structure which is defined in the ISUP standard or a structure which is defined in the BICC standard or a structure which is defined in a standard which is based on one of these standards.

4. The method as claimed in one of the preceding claims, **characterized in that** the following signaling message (56) is a signaling message which is defined for the signaling within a switching office (310) of the switched-through network (12),
and/or **in that** signaling messages with the same structure as the following signaling message (56) are transmitted, within a switching office (310) of the switched-through network (12), to different connecting units, preferably to connecting units for connecting subscribers and/or to connecting units for connecting user data transmission paths to other switching offices of the switched-through network (12) and/or to connecting units for providing the network gateway function.

5. The method as claimed in one of the preceding claims, **characterized in that** the network gateway function (10) is provided using at least two spatially separated units.

6. The method as claimed in claim 5, **characterized in that** a network gateway unit (28) transmits the user data between the networks (12, 14),
and **in that** the network gateway unit (28) is controlled by a preferably spatially remote control unit, preferably by means of a defined control protocol, in particular according to protocol H.248 or according to protocol MGCP or according to a protocol based on one of these protocols.

7. The method as claimed in claim 5 or 6, **characterized in that** a switching office (100) of the switched-through network (12) transmits the standard signaling message (150).

8. The method as claimed in claim 7, **characterized in that** a further, preferably spatially remote, switching office (102) of the switched-through network (12) generates the following signaling message (142).

9. The method as claimed in one of the preceding claims, **characterized in that** the packet transmission network (14) is a network which operates according to an Internet protocol, a network which operates according to the ATM protocol or a network which operates on a protocol based on one of these protocols,
and/or **in that** the switched-through network (12) is a network in which data are transmitted in time slots according to a time-division multiplex method, and/or **in that** in the switched-through network (12) signaling is carried out according to the ISUP standard or according to a standard which is based on this standard,
and/or **in that** in the packet transmission network (14) signaling is carried out according to the H.323 protocol, according to the SIP protocol or according to a protocol which is based on one of these protocols.

10. The method as claimed in one of the preceding claims, **characterized in that** there is no further switching office, or at least one further switching office, of the switched-through network (12) in the signaling path and/or in the transmission path between a switching office which brings about the switching-on of the subscriber signal (38) and a unit of the network gateway function (10),
and/or **in that** the switching office which brings about the switching-on is an originating switching office (18) to which the calling terminal device (16) is connected.

11. The method as claimed in one of claims 1 to 9, **characterized in that** the subscriber signal (38) is fed into a unit (28) for transferring user data between the networks (12, 14).

12. The method as claimed in one of the preceding claims, **characterized in that** the subscriber signal (38) is a ringing tone or an announcement which indicates that the called terminal device (36) is signaling the call for a subscriber (TlnB).

13. The method as claimed in one of the preceding claims, **characterized in that** the following signaling message (56) contains an indicator (BCI) whose value depends on whether the called terminal device (36) is occupied or busy,
**in that** the indicator (BCI) of the occupied state and the indicator (OBCI) of the subscriber signal (38) are checked by reference to the following signaling message (56),
and **in that** the switching-on of the subscriber signal (38) is brought about only if the called terminal device (36) is free and if a subscriber signal (38) has not yet been generated.

14. A switching office (100), which has means for carrying out the method steps according to any of the preceding claims.

15. A program with an instruction sequence during whose execution a method as claimed in one of claims 1 to 13 is carried out by a processor.

## Revendications

1. Procédé de connexion d'un signal d'abonné (38),
dans lequel un terminal appelant (16) d'un réseau de télécommunication commuté (12) définit, en intégrant une fonction de passerelle (10), une voie de transmission (34) vers un terminal appelé (36) d'un réseau de transmission par paquets (14),
dans lequel le message de signalisation (54,138) défini pour le réseau de transmission par paquets (14) arrive du côté du terminal appelé (36) et indique que le terminal appelé (36) signale l'appel à un abonné (TlnB),
dans lequel, lorsque survient le message de signalisation (54) défini pour le réseau de transmission par paquets (14), un message de signalisation consécutif (56) est produit, qui indique qu'aucun signal d'abonné (38) pour le terminal appelant (36) n'a encore été produit ou qui contient une information (OBCI) correspondante,
dans lequel le message de signalisation consécutif (56) est traité, la connexion du signal d'abonné (38) pour le terminal appelant (16) étant commandée et un message de signalisation standard (60) défini pour le réseau commuté (12) étant produit, qui indique qu'un signal d'abonné (38) pour le terminal appelant est déjà produit.

2. Procédé selon la revendication 1, **caractérisé en ce que** le message de signalisation consécutif (56) est un message défini pour le réseau commuté (12), qui indique que suffisamment de chiffres de sélection ont été émis.

3. Procédé selon la revendication 1 ou 2, **caractérisé en ce que** le message de signalisation standard (60) et/ou le message de signalisation consécutif (56) est un message de signalisation ayant une structure définie dans le standard ISUP ou dans le standard BICC ou dans un standard basé sur l'un de ces standards.

4. Procédé selon l'une des revendications précédentes, **caractérisé en ce que** le message de signalisation consécutif (56) est un message de signalisation défini pour la signalisation au sein d'un central téléphonique (310) du réseau commuté (12),
et/ou **en ce que** les messages de signalisation de même structure que les messages de signalisation consécutifs (56) sont émis dans un central téléphonique (310) du réseau commuté (12) vers différentes unités de connexion, de préférence vers des unités de connexion d'abonnés et/ou vers des unités de connexion de lignes de transmission de données utiles vers d'autres centraux téléphoniques du réseau commuté (12) et/ou vers des unités de connexion destinées à assurer la fonction de passerelle.

5. Procédé selon l'une des revendications précédentes, **caractérisé en ce que** la fonction de passerelle (10) est assurée à l'aide d'au moins deux unités physiquement séparées.

6. Procédé selon la revendication 5, **caractérisé en ce qu'**une unité passerelle (28) transmet les données utiles entre les réseaux (12, 14), et **en ce que** l'unité passerelle (28) est commandée par une unité de commande de préférence physiquement éloignée, de préférence au moyen d'un protocole de commande défini, en particulier selon le protocole H.248 ou selon le protocole MGCP ou selon un protocole basé sur l'un des ces protocoles.

7. Procédé selon la revendication 5 ou 6, **caractérisé en ce qu'**un central téléphonique (100) du réseau commuté (12) émet le message de signalisation standard (150).

8. Procédé selon la revendication 7, **caractérisé en ce qu'**un autre central téléphonique (102), de préférence physiquement éloigné, du réseau commuté (12) produit le message de signalisation consécutif (142).

9. Procédé selon l'une des revendications précédentes, **caractérisé en ce que** le réseau de transmission par paquets (14) est un réseau fonctionnant selon le protocole Internet, un réseau fonctionnant selon le protocole ATM ou un réseau fonctionnant selon un protocole basé sur l'un des ces protocoles,
et/ou **en ce que** le réseau commuté (12) est un réseau où les données sont transmises dans des canaux temporels selon un procédé de multiplexage temporel,
et/ou **en ce que** la signalisation dans le réseau commuté (12) se fait selon le standard ISUP ou selon un standard basé sur ce standard,
et/ou **en ce que** la signalisation dans le réseau de transmission par paquets (14) se fait selon le protocole H.323, selon le protocole SIP ou selon un protocole basé sur l'un de ces protocoles.

10. Procédé selon l'une des revendications précédentes, **caractérisé en ce qu'**entre un central téléphonique commandant la connexion du signal d'abonné (38) et une unité de la fonction de passerelle (10), aucun central téléphonique du réseau commuté ou au moins encore un autre central téléphonique du réseau commuté se trouve dans le chemin de signalisation et/ou dans le chemin de transmission,
et/ou **en ce que** le central téléphonique commandant ladite connexion est un central téléphonique d'origine (18) auquel le terminal appelant (16) est raccordé.

11. Procédé selon l'une des revendications 1 à 9, **caractérisé en ce que** le signal d'abonné (38) est appliqué dans une unité (28) destinée à transférer des données utiles entre les réseaux (12, 14).

12. Procédé selon l'une des revendications précédentes, **caractérisé en ce que** le signal d'abonné (38) est une tonalité d'appel ou une annonce qui indique que le terminal appelé (36) signale l'appel pour un abonné (TlnB).

13. Procédé selon l'une des revendications précédentes, **caractérisé en ce que** le message de signalisation consécutif (56) contient une information (BCI) dont la valeur dépend de la question de savoir si le terminal appelé (36) est occupé,
**en ce que** l'information (BCI) concernant l'occupation et l'information (OBCI) concernant le signal d'abonné (38) sont vérifiées,
et **en ce que** la connexion du signal d'abonné (38) n'est commandée que si le terminal appelé (36) est libre et qu'aucun signal d'abonné (38) n'a encore été produit.

14. Central téléphonique (100) comprenant des moyens pour la mise en oeuvre des étapes de procédé indiquées dans l'une des revendications précédentes.

15. Programme contenant une séquence d'instructions durant l'exécution desquelles par un processeur un procédé selon l'une des revendications 1 à 13 est mis en oeuvre.
